**Europäisches Patentamt**

**European Patent Office**

**Office européen des brevets**

(19)

(11) Numéro de publication : **0 092 522**
**B1**

# FASCICULE DE BREVET EUROPÉEN

(12)

(45) Date de publication du fascicule du brevet :
02.03.88

(21) Numéro de dépôt : **83810154.1**

(22) Date de dépôt : **14.04.83**

(51) Int. Cl.⁴ : **G 04 C 3/14**, H 02 K 37/00,
H 02 P 8/00

(54) Moteur pas-à-pas réversible et procédé de commande de ce moteur.

(30) Priorité : **21.04.82 CH 2412/82**

(43) Date de publication de la demande :
**26.10.83 Bulletin 83/43**

(45) Mention de la délivrance du brevet :
**02.03.88 Bulletin 88/09**

(84) Etats contractants désignés :
**DE FR GB**

(56) Documents cités :
**EP-A- 0 026 002**
**WO-A-81 /012 05**
**DE-A- 2 427 742**
**FR-A- 2 402 340**
**GB-A- 1 520 968**
**GB-A- 2 054 978**
**US-A- 3 958 167**
**US-A- 4 144 467**

(73) Titulaire : **ETA S.A., Fabriques d'Ebauches**
**Schild-Rust-Strasse 17**
**CH-2540 Granges (CH)**

(72) Inventeur : **Guérin, Yves**
**Däderizstrasse 108**
**CH-2540 Granges (CH)**

(74) Mandataire : **de Montmollin, Henri et al**
**ICB Ingénieurs Conseils en Brevets SA Passage**
**Max. Meuron 6**
**CH-2001 Neuchâtel (CH)**

Jouve, 18, rue St-Denis, 75001 Paris, France

## Description

La présente invention a pour objet un moteur pas-à-pas réversible comprenant une première, une deuxième et une troisième pièce polaire comportant respectivement un premier, un deuxième et un troisième épanouissement polaire délimitant entre eux un espace sensiblement cylindrique, une première bobine reliée magnétiquement à la première et à la deuxième pièce polaire pour produire un premier champ magnétique dans l'espace cylindrique en réponse à un premier courant, une deuxième bobine reliée magnétiquement à la première et à la troisième pièce polaire pour produire un deuxième champ magnétique dans l'espace cylindrique en réponse à un deuxième courant, et un rotor monté rotativement autour d'un axe sensiblement confondu avec l'axe de l'espace cylindrique et comportant un aimant permanent ayant un axe d'aimantation perpendiculaire à l'axe de rotation. La présente invention a également pour objet un procédé de commande de ce moteur.

Un tel moteur, qui peut être avantageusement, mais pas exclusivement, utilisé dans une pièce d'horlogerie électronique pour entraîner les organes d'affichage des informations horaires comprenant généralement des aiguilles d'heures et de minutes ainsi que, souvent, une aiguille de secondes, est décrit dans la demande de brevet GB-A-2 054 978. Cette demande de brevet décrit également le procédé qui est utilisé pour faire tourner le rotor de ce moteur par pas de 180° dans un sens ou dans l'autre.

Ce procédé consiste à délivrer à une des bobines une impulsion de courant d'un premier type ayant un sens déterminé et constant pendant l'impulsion, chaque fois que le rotor doit tourner d'un pas, et à délivrer simultanément à l'autre bobine une impulsion de courant d'un deuxième type dont le sens change à peu près au milieu de l'impulsion. Le sens des impulsions du premier type change à chaque pas du moteur, de même que le sens du début des impulsions du deuxième type. Le sens de rotation du rotor dépend de la bobine à laquelle les impulsions du premier type sont appliquées.

Ce procédé impose la présence de huit transistors de puissance dans le circuit de commande du moteur. Ces huit transistors sont groupés en deux ponts de quatre transistors dans chacun desquels une des bobines est branchée. Ces transistors occupent une assez grande surface sur le circuit intégré qui regroupe tous les circuits électroniques du dispositif auquel est associé le moteur.

Ce moteur tourne par pas de 180°, ce qui implique que si, pour une raison ou pour une autre, il ne réagit pas aux impulsions de courant qui sont appliquées à ses bobines à un certain instant, il ne réagit pas non plus aux impulsions qui lui sont appliquées l'instant d'après, car alors son rotor n'a pas la position correspondant à la polarité de ces impulsions. Le moteur perd donc deux pas.

La demande de brevet FR-A-2 402 340 décrit également un moteur pas-à-pas réversible. Ce moteur comporte deux pièces polaires symétriques et délimitant entre elles un espace cylindrique dans lequel pivote un rotor comprenant un aimant permanent bipolaire. Ce moteur comporte également une bobine unique disposée sur un noyau dont chaque extrémité est reliée à l'une des pièces polaires. Enfin, ce moteur comporte un aimant de positionnement disposé de manière que, en l'absence de courant dans la bobine, l'axe d'aimantation de l'aimant du rotor se trouve dans le plan de symétrie des pièces polaires.

Le procédé de commande de ce moteur, qui est également décrit dans cette demande de brevet FR-A-2 402 340, consiste à appliquer à la bobine une paire d'impulsions motrices dont la deuxième a la polarité inverse de la première, la polarité de la première de ces impulsions déterminant le sens de rotation du rotor. Chacune de ces paires d'impulsions motrices provoque une rotation du rotor de 360°.

Le moteur décrit dans cette demande de brevet FR-A-2 402 340 présente l'avantage de ne pas perdre de deuxième pas si, pour une cause passagère, son rotor ne tourne pas en réponse à une paire d'impulsions motrices. Par contre, le fait que les impulsions de chaque paire ont des polarités inverses impose que le circuit de commande de ce moteur comporte au moins quatre transistors de puissance formant un pont.

La demande de brevet GB-A-1 520 968 décrit un autre genre de moteur pas-à-pas réversible. Ce moteur comporte également deux pièces polaires symétriques délimitant un espace cylindrique dans lequel pivote un rotor comprenant un aimant permanent bipolaire, et une bobine unique disposée sur un noyau dont chaque extrémité est reliée à l'une des pièces polaires. Ce moteur ne comporte pas d'aimant de positionnement du rotor, mais un élément en matériau magnétique ayant une grande perméabilité qui peut être déplacé dans l'entrefer séparant l'une des pièces polaires du rotor pour modifier la position de repos de ce dernier. Cet élément de positionnement est déplacé par une commande manuelle à laquelle il est relié mécaniquement.

Les impulsions de commande de ce moteur sont semblables à celles qui sont utilisées pour commander les moteurs pas-à-pas unidirectionnels couramment utilisés dans les pièces d'horlogerie, c'est-à-dire qu'elles ont des polarités alternées. Le circuit de commande de ce moteur doit donc également comporter quatre transistors de puissance formant un pont. En outre, le sens de rotation de ce moteur est déterminé par des moyens mécaniques qui doivent être actionnés manuellement, ce qui complique la construction du dispositif auquel il est incorporé et ce qui empêche d'utiliser ce moteur lorsque son sens de rotation doit pouvoir être déterminé par son circuit de commande lui-même.

Le but de la présente invention est de proposer un moteur pas-à-pas réversible comprenant une première, une deuxième et une troisième pièce polaire comportant respectivement un premier, un deuxième et un troisième épanouissement polaire délimitant entre eux un espace sensiblement cylindrique, une première bobine reliée magnétiquement à la première et à la deuxième pièce polaire pour produire un premier champ magnétique dans l'espace cylindrique en réponse à un premier courant, une deuxième bobine reliée magnétiquement à la première et à la troisième pièce polaire pour produire un deuxième champ magnétique dans l'espace cylindrique en réponse à un deuxième courant, et un rotor monté rotativement autour d'un axe sensiblement confondu avec l'axe de l'espace cylindrique et comportant un aimant permanent ayant un axe d'aimantation sensiblement perpendiculaire à l'axe de rotation, qui peut être commandé d'une manière très simple, à l'aide d'un circuit ne comprenant qu'un nombre réduit de transistors de puissance, qui ne perd pas forcément un deuxième pas si, pour une raison quelconque, il a perdu un premier pas, et dont le sens de rotation peut être déterminé par son circuit de commande.

Ce but est atteint par le fait que ce moteur comprend en outre des moyens pour orienter l'axe d'aimantation de l'aimant, en l'absence de toute autre influence, selon un axe de repos unique sensiblement parallèle à une droite perpendiculaire à l'axe de rotation et passant par le milieu du premier épanouissement polaire, les épanouissements polaires étant disposés de manière que les champs magnétiques aient, dans l'espace cylindrique, des directions non parallèles sensiblement symétriques par rapport à ladite droite, lesdits champs magnétiques formant ainsi avec l'axe de repos, dans l'espace cylindrique, des angles obtus sensiblement symétriques par rapport à l'axe de repos pour un sens déterminé du premier et, respectivement, du deuxième courant, le rotor pouvant ainsi être mis en rotation par une paire d'impulsions de courant consécutives ayant toutes deux ledit sens déterminé et appliquées l'une à l'une des bobines et l'autre à l'autre des bobines, et le sens de rotation du rotor étant ainsi déterminé par la bobine à laquelle est appliquée la première impulsion de ladite paire d'impulsions.

Dans une première forme d'exécution du moteur, les moyens pour orienter l'axe d'aimantation de l'aimant comportent un deuxième aimant permanent ayant un axe d'aimantation sensiblement situé dans un plan défini par l'axe de rotation et par ladite droite.

Dans une autre forme d'exécution, les moyens pour orienter l'axe d'aimantation de l'aimant comportent un troisième aimant permanent ayant un axe d'aimantation sensiblement symétrique de l'axe d'aimantation du deuxième aimant par rapport à ladite droite.

Cette disposition permet de commander le moteur par des paires d'impulsions de courant successives, de même sens, dont la première est appliquée à l'une des bobines et la deuxième à l'autre bobine. La bobine à laquelle la première impulsion de chaque paire est appliquée détermine le sens de rotation du rotor.

La présence de l'aimant de positionnement a comme conséquence le fait que le rotor n'a qu'une position de repos. Le sens des impulsions est donc toujours le même, ce qui permet, dans une forme d'exécution du circuit de commande tout au moins, de n'utiliser que deux transistors de puissance en tout et pour tout.

D'autres formes d'exécution du circuit de commande comprennent trois ou quatre transistors de puissance. Dans tous les cas, la surface occupée sur le circuit intégré par ces transistors de puissance est nettement inférieure à la surface occupée par les transistors de puissance qui sont nécessaires pour commander le moteur décrit par la demande de brevet GB-A-2 054 978 citée ci-dessus.

Le moteur selon l'invention va maintenant être décrit en détail à l'aide du dessin dans lequel :

- la figure 1 est une vue en plan du moteur selon l'invention ;
- la figure 1a est une vue en coupe partielle d'une forme d'exécution particulière du moteur selon l'invention ;
- la figure 2 est un tableau résumant les diverses étapes de la commande du moteur de la figure 1 ;
- la figure 3 est le schéma d'un exemple de circuit de commande du moteur de la figure 1 ;
- les figures 4a et 4b sont des diagrammes représentant des signaux mesurés en divers points du circuit de la figure 3 pendant les diverses étapes de la commande du moteur de la figure 1 ;
- la figure 5 est le schéma d'une première variante du circuit de commande de la figure 3 ; et
- la figure 6 est le schéma d'une deuxième variante du circuit de commande de la figure 3.

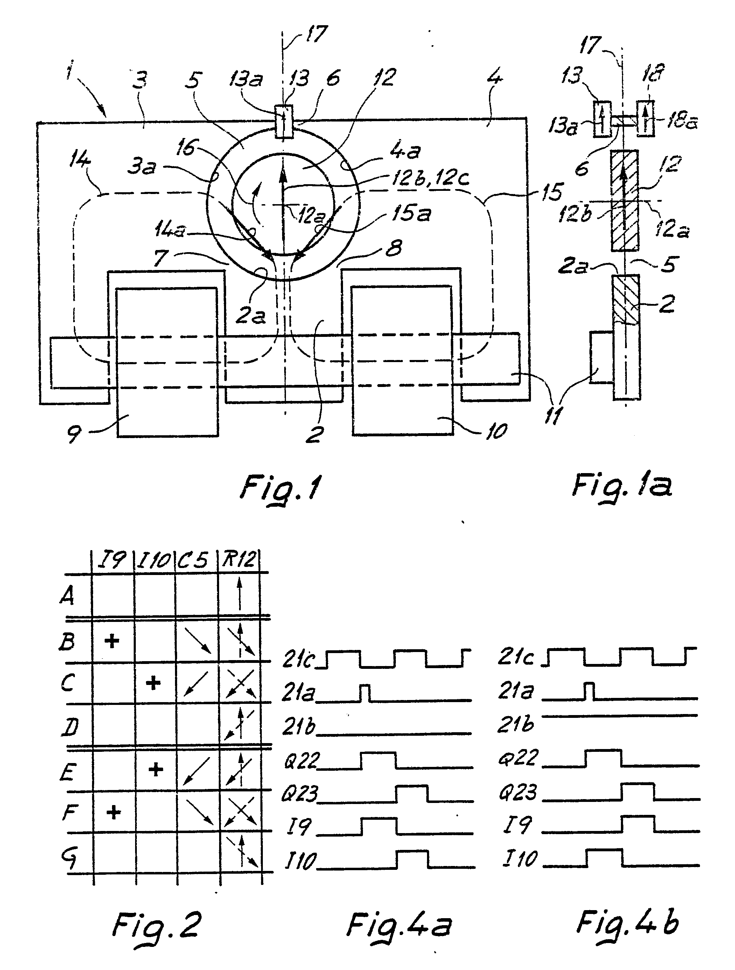

Le moteur représenté, à titre d'exemple non limitatif, à la figure 1, comporte un stator 1 constitué d'une plaque en matériau magnétique doux.

Ce stator 1 comprend une première pièce polaire 2 dont une extrémité est découpée en arc de cercle concave et forme un premier épanouissement polaire 2a.

Le stator 1 comprend deux autres pièces polaires 3 et 4 ayant chacune une extrémité découpée en arc de cercle et formant ainsi deux autres épanouissements polaires 3a, respectivement 4a.

Les pièces polaires 2, 3 et 4 sont disposées de manière que les épanouissements polaires 2a, 3a et 4a délimitent entre eux un espace cylindrique 5. Les extrémités des épanouissements polaires 2a, 3a et 4a sont reliées par des zones 6, 7 et 8 en forme d'isthmes de section suffisamment faible pour que leur réluctance soit nettement plus grande que celle des pièces polaires 2, 3 et 4 et du reste du circuit magnétique qui va être décrit.

Dans l'exemple décrit, ces isthmes 6, 7 et 8 forment une seule pièce avec les pièces polaires 2, 3 et 4. Il est évident que dans d'autres formes d'exécution, ces isthmes pourraient être remplacés par des pièces en matériau non magnétique, ou même supprimés.

Le moteur de la fig. 1 comporte en outre deux bobines 9 et 10 qui sont disposées sur un noyau commun 11. Les extrémités de ce noyau 11 sont reliées magnétiquement aux extrémités des pièces polaires 3 et 4 opposées aux épanouissements polaires 3a et 4a. La partie centrale de ce noyau 11, située entre les bobines 9 et 10, est reliée à l'extrémité de la pièce polaire 2 opposée à la pièce polaire 2a.

Le noyau 11 est relié aux pièces polaires 2, 3 et 4 d'une manière non représentée qui est telle que la réluctance des zones de liaison soit aussi faible que possible.

Le moteur comporte en outre un rotor comprenant de manière classique un arbre ayant un axe de rotation sensiblement confondu avec l'axe de l'espace cylindrique 5. Un aimant permanent et un pignon destiné à engrener avec une roue dentée sont fixés à cet arbre. La roue dentée peut être la première roue d'un train d'engrenage entraînant, par exemple, les aiguilles d'une pièce d'horlogerie. Pour ne pas charger inutilement le dessin, seul l'aimant permanent faisant partie du rotor a été représenté, avec la référence 12. L'axe de rotation du rotor, perpendiculaire au plan de la fig. 1, est désigné par 12a.

L'aimant 12, de forme cylindrique, est aimanté diamétralement. Son axe d'aimantation, qui est perpendiculaire à l'axe de rotation 12a, est symbolisé par la flèche désignée par la référence 12b.

Le moteur comporte enfin un aimant de positionnement 13, par exemple en forme de barreau aimanté longitudinalement, disposé à proximité de l'isthme 6, de manière que son axe d'aimantation 13a soit porté par une droite 17 passant sensiblement par le milieu de l'épanouissement polaire 2a et par l'axe de rotation 12a. L'axe d'aimantation 13a est orienté, dans l'exemple décrit, dans le sens allant du milieu de l'épanouissement polaire 2a vers l'axe de rotation 12a.

Le champ de l'aimant 13 exerce sur l'aimant 12 faisant partie du rotor un couple de positionnement ayant une période de 360°, qui tend à maintenir ou à ramener l'axe d'aimantation 12b dans la position indiquée à la fig. 1. Dans cette position, qui est la position de repos de l'aimant 12 et donc du rotor dont il fait partie, l'axe d'aimantation 12b coïncide avec un axe de repos désigné par 12c qui a, évidemment, le même sens et la même direction que l'axe d'aimantation 13a de l'aimant 13.

Lorsqu'un courant est envoyé dans la bobine 9, par exemple, le champ magnétique créé par ce courant suit un circuit magnétique qui comporte, en série, la pièce polaire 3 et l'espace cylindrique 5 entre l'épanouissement polaire 3a et les épanouissements polaires 2a et 4a, et qui se referme sur le noyau 11 par les pièces polaires 2 et 4 en parallèle.

Dans l'espace cylindrique 5, ce champ est perpendiculaire à l'axe de rotation 12a de l'aimant 12. Ses lignes de force sont symbolisées par la ligne en pointillés 14. Pour ne pas charger inutilement le dessin, ces lignes de force n'ont pas été représentées dans la pièce polaire 4.

La flèche désignée par 14a symbolise la résultante du champ créé par la bobine 9 dans l'espace cylindrique 5, entre l'épanouissement polaire 3a et les épanouissements polaires 2a et 4a. Le sens de cette flèche désigne le sens du champ créé par un courant circulant dans la bobine 9 dans un sens désigné arbitrairement comme positif.

Des considérations similaires peuvent être faites à propos du champ créé par le passage d'un courant dans la bobine 10. La ligne en pointillés 15 symbolise les lignes de force de ce champ, et la flèche désignée par 15a représente la résultante de ce champ dans l'espace cylindrique 5 avec le sens et la direction qu'il a lorsqu'un courant qualifié arbitrairement de positif est envoyé dans la bobine 10. Cette résultante est également perpendiculaire à l'axe de rotation 12a.

Il est important de noter que, avec les conventions de sens définies ci-dessus, les résultantes des champs créés dans l'espace cylindrique 5 par des courants positifs circulant dans les bobines 9 et 10 forment avec l'axe de repos 12c des angles obtus sensiblement symétriques l'un de l'autre par rapport à cet axe de repos 12c. Ces angles sont définis, de manière usuelle en géométrie, comme étant les angles que feraient les flèches 12c et 14a, respectivement 15a, si elles étaient déplacées parallèlement à elles-mêmes jusqu'à ce que leurs origines coïncident.

La grandeur de ces angles dépend de la disposition relative des divers éléments du moteur, et principalement des angles occupés, autour de l'espace cylindrique 5, par les épanouissements polaires 2a, 3a et 4a.

En pratique, les angles formés par les résultantes et l'axe de repos 12c peuvent avoir une valeur comprise entre 100° et 160° environ. De préférence, ces angles ont une valeur sensiblement égale à 120°.

Dans la fig. 2, qui va maintenant être utilisée pour expliquer le fonctionnement du moteur, ces angles ont été choisis arbitrairement égaux à 135° environ, de manière à clarifier autant que possible le dessin.

Cette fig. 2 présente un tableau qui résume les diverses étapes de la commande du moteur de la fig. 1. La ligne A de ce tableau correspond à l'état de repos du moteur. Chacune des autres lignes B à G correspond à une de ces étapes de la commande du moteur.

Un signe + inscrit dans une des colonnes désignées par I9 et I10 indique qu'un courant de sens positif est envoyé dans la bobine 9 ou la bobine 10 à l'étape correspondante.

Les flèches dessinées dans la colonne C5 indiquent le sens et la direction de la résultante du champ créé dans l'espace 5 par le courant mentionné dans la colonne I9 ou I10, à la même ligne.

La position que le rotor prend en réponse à ces champs ou sous l'influence du couple de positionnement est indiquée par les flèches dessinées en traits pleins dans la colonne R12. Le sens et la direction de ces flèches correspondent au sens et à la direction de la flèche 12b symbolisant le champ de l'aimant 12. Les flèches en pointillés dessinées dans cette colonne R12 rappellent la position que le rotor occupait avant de prendre la position indiquée par les flèches en traits pleins.

La ligne A du tableau de la fig. 2 correspond à la position de repos du moteur. Aucun courant ne circule dans les bobines 9 et 10, et le rotor occupe la position indiquée à la fig. 1 dans laquelle l'axe d'aimantation 12b de l'aimant 12 coïncide avec l'axe de repos 12c.

Les lignes B, C et D du tableau de la fig. 2 résument la manière de commander le moteur pour que son rotor fasse un pas, c'est-à-dire un tour complet, dans le sens de la flèche 16 de la fig. 1, qui est choisi arbitrairement comme sens de rotation positif.

Un courant positif est tout d'abord envoyé dans la bobine 9 par un circuit de commande dont un exemple sera décrit plus loin (ligne B). L'aimant 12 est donc soumis au champ symbolisé à la colonne C5. Si l'intensité du courant dans la bobine 9 est suffisante, le rotor tourne dans le sens positif jusqu'à la position indiquée à la colonne R12, où l'axe d'aimantation 12b devient parallèle à ce champ.

Lorsque le rotor atteint cette position, au moins approximativement, le circuit de commande interrompt le courant dans la bobine 9 et enclenche un courant, également positif, dans la bobine 10 (ligne C). Le champ créé par ce courant dans l'espace cylindrique 5 est symbolisé à la colonne C5. Le rotor poursuit sa rotation dans le sens positif jusqu'à la position indiquée à la colonne R12, où l'axe d'aimantation 12b devient parallèle à ce champ.

Lorsque le rotor atteint cette position, au moins approximativement, le circuit de commande interrompt le courant dans la bobine 10 (ligne D). L'aimant 12 est alors soumis uniquement au couple de positionnement créé par l'aimant 13, et il termine sa rotation en réponse à ce couple. Le rotor reprend donc la position indiquée à la colonne R12 où l'axe d'aimantation 12b coïncide avec l'axe de repos 12c.

Le rotor a donc fait un pas, c'est-à-dire un tour complet, dans son sens positif en réponse à une paire d'impulsions de courant positives dont la première est appliquée à la bobine 9 et la deuxième à la bobine 10.

Il est évident que le rotor fait à nouveau un tour complet dans son sens positif chaque fois qu'une telle paire d'impulsions est appliquée aux bobines 9 et 10, dans cet ordre.

Les lignes E, F et G du tableau de la fig. 2 résument la manière de commander le moteur pour que son rotor fasse un pas, c'est-à-dire également un tour complet, dans le sens négatif.

Un courant positif est tout d'abord envoyé dans la bobine 10 par le circuit de commande (ligne E). Le champ créé par ce courant dans l'espace cylindrique 5 est symbolisé à la colonne C5, et le rotor tourne en sens négatif jusqu'à la position indiquée à la colonne R12 où l'axe d'aimantation 12b devient parallèle à ce champ.

Lorsqu'il atteint cette position, au moins approximativement, le circuit de commande interrompt le courant dans la bobine 10 et envoie un courant, également positif, dans la bobine 9 (ligne F). Le champ créé par ce courant dans l'espace cylindrique 5 est symbolisé à la colonne C5. Le rotor poursuit sa rotation en sens négatif jusqu'à ce qu'il atteigne la position indiquée à la colonne R12, où l'axe d'aimantation 12b devient parallèle à ce champ.

Lorsque le rotor atteint cette position, au moins approximativement, le circuit de commande interrompt le courant dans la bobine 9 (ligne G). Le rotor est alors soumis uniquement au couple de positionnement créé par l'aimant 13, et il termine sa rotation en réponse à ce couple.

Le rotor a donc fait un pas, c'est-à-dire un tour complet, en sens négatif en réponse à une paire d'impulsions de courant positives dont la première est appliquée à la bobine 10 et la deuxième est appliquée à la bobine 9.

Il est évident que le rotor fait à nouveau un tour complet dans son sens négatif chaque fois qu'une telle paire d'impulsions est appliquée aux bobines 10 et 9, dans cet ordre.

Il est important de noter que, dans l'exemple décrit, l'orientation de l'axe de repos 12c et le sens des champs créés par les courants dans les bobines 9 et 10 ont été choisis de manière que les angles qu'ils forment dans l'espace cylindrique 5, au sens défini ci-dessus, soient des angles obtus. Grâce à ce choix, le rotor tourne d'un angle supérieur à 90° en réponse à la première impulsion de chaque paire d'impulsions, ce qui permet à la deuxième impulsion de lui faire poursuivre sa rotation, et non pas de le ramener simplement à sa position de repos.

Si l'axe d'aimantation 13a de l'aimant de positionnement 13 était orienté dans le sens inverse de celui qu'il a à la fig. 1, l'axe de repos 12c de l'aimant 12 serait également orienté dans le sens inverse de celui qui est représenté dans la fig. 1. Dans ce cas, il suffirait d'inverser le sens d'enroulement du fil des bobines, ou leur branchement, ou le sens des impulsions de courant envoyées dans les bobines, pour inverser le sens des champs créés dans l'espace cylindrique 5. Les angles formés par ces champs et l'axe de repos seraient alors à nouveau obtus, et le moteur fonctionnerait également de la manière décrite ci-dessus.

Il est évident que de nombreuses modifications pourraient être apportées à la forme et à la disposition relative des divers éléments du moteur de la fig. 1, sans pour autant sortir du cadre de l'invention.

Par exemple, les bobines 9 et 10 pourraient être montées sur des noyaux indépendants ayant une extrémité reliée à la pièce polaire 2 et l'autre extrémité reliée à la pièce polaire 3, respectivement à la pièce polaire 4. Ces noyaux indépendants pourraient également ne pas être alignés.

Quelle que soit la disposition des bobines 9 et 10, la seule condition qu'elles doivent remplir est qu'elles créent chacune un champ qui traverse l'espace cylindrique 5 en réponse à un courant. D'autre part, les épanouissements polaires 2a, 3a et 4a doivent être disposés de manière que ce champ fasse avec l'axe de repos 12c un angle obtus pour un des sens de ce courant. Pour des raisons de symétrie évidentes, cet axe de repos 12c doit être au moins sensiblement parallèle à la droite 17 dessinée en traits mixtes à la fig. 1. Cette droite 17 est perpendiculaire à l'axe de rotation 12a et passe par le milieu de l'épanouissement polaire 2a.

Cette condition est évidemment remplie lorsque l'axe d'aimantation 13a de l'aimant 13 est porté par la droite 17. Mais elle est également remplie lorsque cet axe d'aimantation 13a est situé pratiquement n'importe où dans un plan défini par l'axe de rotation 12a et par la droite 17. Les seules positions où cet axe d'aimantation 13a ne peut pas se trouver sont celles où il est confondu avec l'axe de rotation 12a.

Dans toutes les positions où il peut se trouver, cet axe d'aimantation 13a peut en outre être orienté dans toutes les directions pour lesquelles le champ de l'aimant 13 est tel que sa résultante dans la partie du plan défini ci-dessus située dans l'espace cylindrique 5 a une composante non nulle dans la direction souhaitée pour l'axe de repos 12c.

Dans tous les cas où l'aimant de positionnement 13 n'est pas situé exactement dans le même plan que l'aimant 12 du rotor, la force qu'il exerce sur ce dernier a une composante parallèle à l'axe de rotation 12a. Cette force axiale entraîne une augmentation du frottement de l'un des pivots du rotor dans son palier.

Cet inconvénient peut être évité par l'adjonction d'un deuxième aimant de positionnement semblable à l'aimant 13 et situé à un emplacement tel que son axe d'aimantation soit sensiblement symétrique de l'axe d'aimantation 13a par rapport à la droite 17. Ce deuxième aimant exerce ainsi sur l'aimant 12 du rotor une force dont la composante axiale annule, ou au moins diminue, celle qui est due à l'aimant 13. Par contre, les composantes radiales de ces forces s'additionnent, ce qui augmente le couple de positionnement du rotor.

La fig. 1a est une coupe partielle d'un moteur comprenant ce deuxième aimant de positionnement. Tous les autres éléments de ce moteur sont identiques aux éléments correspondants du moteur de la fig. 1 et portent les mêmes références. La coupe de cette fig. 1a passe par l'axe de rotation 12a et par la droite 17. Le deuxième aimant de positionnement et son axe d'aimantation sont respectivement désignés par les références 18 et 18a.

Dans l'exemple de commande du moteur décrit ci-dessus, la fin de la première impulsion de chaque paire coïncide avec le début de la deuxième impulsion. Selon la charge mécanique que doit entraîner le moteur, il est possible d'enclencher la deuxième impulsion de chaque paire un instant avant ou après la fin de la première impulsion. Dans le premier cas, le couple fourni par le moteur est augmenté au prix d'une légère augmentation de sa consommation. Dans le second cas, au contraire, la consommation du moteur est diminuée au prix d'une légère diminution du couple qu'il peut fournir.

La fig. 3 est le schéma d'un exemple de circuit de commande du moteur de la fig 1. Les fig. 4a et 4b sont des diagrammes représentant des signaux mesurés en quelques points de ce circuit lors d'une rotation du rotor dans son sens positif, respectivement négatif.

Le moteur est représenté dans cette fig. 3 par ses bobines 9 et 10, qui sont reliées d'une part, ensemble, à la borne positive d'une source d'alimentation électrique non représentée, et d'autre part, séparément, aux drains de deux transistors à effet de champ de type N désignés par T1 et T2.

Deux diodes de protection D1 et D2 sont branchées en parallèle chacune avec une des bobines 9 et 10. Ces diodes D1 et D2 protègent les transistors T1 et T2, de manière classique, contre les surtensions qui apparaîtraient, si elles n'étaient pas prévues, aux bornes des bobines à chaque interruption du courant.

Les sources des transistors T1 et T2 sont reliées ensemble à la borne négative de la source d'alimentation.

Un circuit 21 regroupe tous les circuits électroniques du dispositif auquel le moteur est associé. Si ce dispositif est une montre électronique, le circuit 21 comprend une base de temps formée en général d'un oscillateur à quartz et d'un diviseur de fréquence, et des circuits auxiliaires tels qu'un circuit de correction associé à une tige de mise à l'heure et/ou à des boutons-poussoirs.

Dans le présent exemple, ce circuit 21 comporte une sortie 21a qui délivre une impulsion, c'est-à-dire qui prend temporairement l'état logique « 1 », chaque fois que le rotor du moteur doit faire un pas. Le sens dans lequel ce pas doit être fait est déterminé par un signal fourni par une sortie 21b, qui est, toujours par exemple, à l'état logique « 0 » lorsque le rotor doit tourner dans son sens positif, et à l'état logique « 1 » lorsque ce rotor doit tourner dans son sens négatif. Une sortie 21c du circuit 21 délivre un signal périodique à une fréquence de, par exemple, 128 Hz. Les impulsions fournies par la sortie 21a sont synchronisées avec ce signal de manière qu'elles passent à l'état « 1 » à un instant où ce signal périodique passe à l'état « 0 ».

L'entrée d'horloge C1 d'un flip-flop de type D 22 est reliée à la sortie 21a du circuit 21. La sortie Q̄ de ce flip-flop 21 est reliée à son entrée D, et son entrée de remise à zéro R est reliée à la sortie 21c du circuit 21. De cette manière, la sortie Q du flip-flop 22 délivre une impulsion chaque fois que la sortie 21a du circuit 21 passe à l'état « 1 ». La durée de cette impulsion est égale à une demi-période du signal fourni par la sortie 21c du circuit 21, c'est-à-dire 3,9 ms environ dans le présent exemple. La sortie $\overline{Q}$ du flip-flop 22 est reliée à l'entrée d'horloge C1 d'un autre flip-flop de type D 23, dont la sortie $\overline{Q}$ est également reliée à son entrée D, et dont l'entrée de remise à zéro R est reliée à la sortie 21c du circuit 21 à travers un inverseur 24.

La sortie Q de ce flip-flop 23 délivre donc une deuxième impulsion ayant également une durée de 3,9 ms environ à la fin de chaque impulsion fournie par la sortie Q du flip-flop 22.

Ces deux impulsions consécutives fournies par les sorties Q des flip-flops 22 et 23 sont transmises aux grilles G1 et G2 des transistors T1 et T2 par un circuit logique comprenant des portes ET 25 à 28, des portes OU 29 et 30 et un inverseur 31. Ce circuit logique, qui ne sera pas décrit en détail, fonctionne de la manière suivante :

Si la sortie 21b du circuit 21 est à l'état logique « 0 », chaque impulsion fournie par la sortie Q du flip-flop 22 est transmise à la grille G1 du transistor T1 par les portes 25 et 29, et chaque impulsion fournie par la sortie Q du flip-flop 23 est transmise à la grille G2 du transistor T2 par les portes 27 et 30.

Si, par contre, la sortie 21b du circuit 21 est à l'état logique « 1 », chaque impulsion fournie par la sortie Q du flip-flop 22 est transmise à la grille G2 du transistor T2 par les portes 28 et 30, et chaque impulsion fournie par la sortie Q du flip-flop 23 est transmise à la grille G1 du transistor T1 par les portes 26 et 29.

Les états logiques « 0 » et « 1 » sont respectivement représentés, de manière classique, par des potentiels égaux aux potentiels de la borne négative et de la borne positive de l'alimentation. Lorsque les sorties Q des deux flip-flops 22 et 23 sont à l'état « 0 », les grilles G1 et G2 sont également à l'état « 0 ». Les deux transistors T1 et T2 sont donc bloqués, et aucun courant ne circule dans les bobines 9 et 10.

Lorsque l'une des grilles G1 et G2 passe à l'état logique « 1 », de la manière décrite ci-dessus, le transistor T1 ou T2 correspondant devient conducteur, et un courant circule dans la bobine 9 ou dans la bobine 10, dans le sens indiqué par les flèches désignées par I9 et I10 à la fig. 3. Ce sens est bien entendu celui qui a été défini ci-dessus comme positif, c'est-à-dire le sens pour lequel le champ créé par chacun de ces courants dans l'espace cylindrique 5 fait un angle obtus avec l'axe de repos 12c.

Lorsque la sortie 21b du circuit 21 est à l'état « 0 », un courant positif circule donc dans la bobine 9 pendant la durée de l'impulsion fournie par la sortie Q du flip-flop 22, et un courant également positif circule ensuite dans la bobine 10 pendant la durée de l'impulsion fournie par la sortie Q du flip-flop 23. Ce cas correspond à celui qui est résumé par les lignes B, C et D du tableau de la fig. 2. Le rotor du moteur fait donc un pas dans son sens positif en réponse à l'impulsion fournie par la sortie 21a du circuit 21 lorsque la sortie 21b de ce circuit 21 est à l'état « 0 ».

Lorsque la sortie 21b du circuit 21 est à l'état « 1 », un courant positif circule tout d'abord dans la bobine 10, pendant la durée de l'impulsion fournie par la sortie Q du flip-flop 22. Un courant également positif circule ensuite dans la bobine 9, pendant la durée de l'impulsion fournie par la sortie Q du flip-flop 23. Ce cas correspond à celui qui est résumé par les lignes E, F et G du tableau de la fig. 2. Le rotor du moteur fait donc un pas dans son sens négatif en réponse à l'impulsion fournie par la sortie 21a du circuit 21 lorsque la sortie 21b de ce circuit 21 est à l'état « 1 ».

Le circuit de commande du moteur ne comporte, dans cette forme d'exécution, que deux transistors de puissance T1 et T2. Ces transistors de puissance occupent donc sur le circuit intégré quatre fois moins de surface que ceux qui sont nécessaires à la commande du moteur décrit par la demande de brevet GB-A-2 054 978 déjà citée. Ce gain de surface considérable est dû simplement à la présence de l'aimant de positionnement 13a, qui donne la possibilité de commander le moteur par des impulsions de courant ayant toutes le même sens.

Dans le circuit de commande représenté à la fig. 3, les transistors T1 et T2 sont bloqués tous les deux aussi longtemps que le rotor ne doit pas faire un pas, et les bobines 9 et 10 sont en circuit ouvert. Il est parfois souhaité que ces bobines soient court-circuitées au moins pendant un instant, juste après la fin de la deuxième impulsion de courant, pour accélérer l'amortissement des oscillations que le rotor exécute autour de sa position d'équilibre à la fin de son pas.

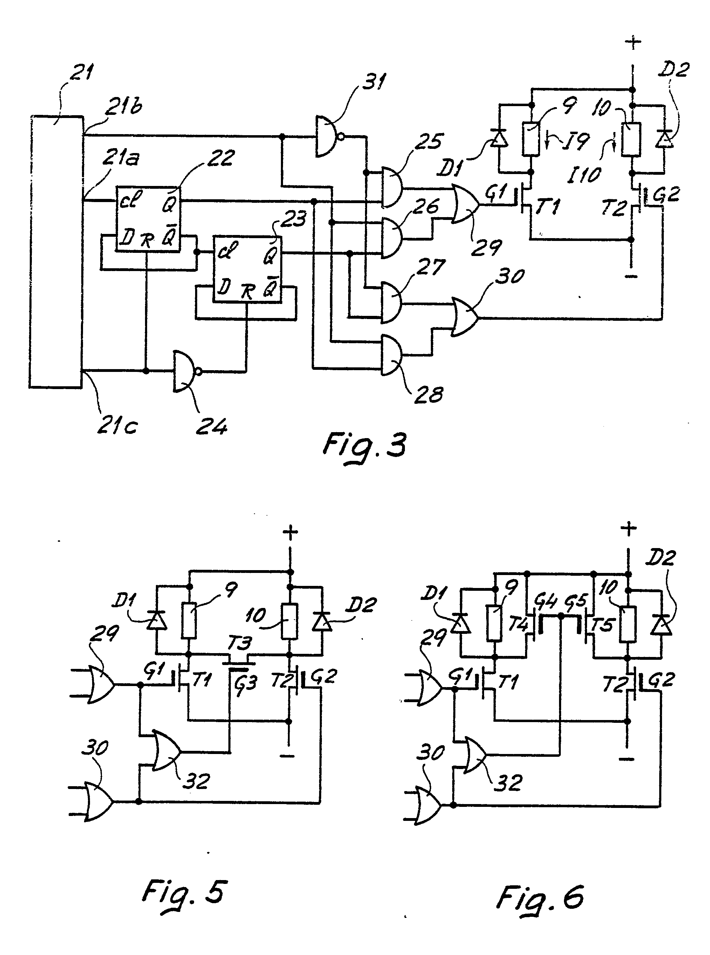

La fig. 5 représente une partie d'une première variante du schéma de la fig. 3 permettant de réaliser un tel court-circuit pendant tout le temps qui sépare deux pas successifs du rotor. Comme dans le schéma de cette fig. 3, les bobines 9 et 10 sont reliées aux drains des transistors T1 et T2, dont les grilles G1 et G2 sont reliées aux sorties des portes 29 et 30. Le reste du circuit logique est identique à celui de la fig. 3 et n'a pas été représenté.

Le drain et la source d'un troisième transistor à effet de champ T3 sont respectivement reliés au drain du transistor T1 et au drain du transistor T2.

Le drain et la source d'un transistor à effet de champ étant interchangeables, il est indifférent que le drain ou la source du transistor T3 soit relié au drain du transistor T1 ou du transistor T2.

Dans l'exemple décrit, ce transistor T3 est de type P. Il est donc bloqué lorsque sa grille G3 est à l'état logique « 1 », et il est conducteur lorsque cette grille G3 est à l'état logique « 0 ».

Cette grille G3 est reliée à la sortie d'une porte OU 32, dont les entrées sont reliées aux sorties des portes 29 et 30.

Lorsque l'une quelconque des sorties des portes 29 et 30 est à l'état « 1 », c'est-à-dire lorsqu'un courant circule dans une des bobines 9 et 10, la grille G3 est donc également à l'état « 1 », et le transistor T3 est bloqué. Le circuit de commande fonctionne de la manière décrite ci-dessus.

Par contre, dès que les sorties des portes 29 et 30 sont toutes deux à l'état « 0 », c'est-à-dire dès la fin de la deuxième impulsion de courant, la grille G3 passe également à l'état « 0 », et le transistor T3 devient conducteur. Les bobines 9 et 10 sont donc alors réunies en série dans un circuit dans lequel le courant induit par les oscillations du rotor autour de sa position de repos peut circuler, ce qui accélère l'amortissement de ces oscillations.

Le transistor T3 pourrait être également de type N. Dans ce cas, il suffirait d'intercaler un inverseur entre la sortie de la porte 32 et la grille G3.

Le fait que les deux bobines soient en série rend cependant l'amortissement des oscillations du rotor moins efficace que si chaque bobine était directement court-circuitée. La fig. 6 représente ·une partie d'une deuxième variante du schéma de la fig. 3, qui permet de réaliser un court-circuit direct des bobines 9 et 10.

Dans cette fig. 6, le transistor T3 de la fig. 5 est remplacé par deux transistors à effet de champ de type P, T4 et T5, dont les drains sont reliés à la borne positive de l'alimentation et dont les sources sont reliées, séparément, aux drains des transistors T1, respectivement T2. Les grilles G4 et G5 de ces deux transistors T4 et T5 sont reliées, ensemble, à la sortie de la porte 32.

De cette manière, les transistors T4 et T5, comme le transistor T3 de la fig. 5, sont bloqués pendant que les impulsions de courant sont envoyées dans les bobines, et sont conducteurs dès la fin de la deuxième impulsion de courant. Les bobines 9 et 10 sont donc alors directement court-circuitées, ce qui assure un amortissement maximum des oscillations du rotor.

Il faut noter que, dans ces variantes, le nombre de transistors nécessaires· à la commande du moteur est au plus égal à la moitié du nombre de transistors utilisés dans le circuit de commande du moteur décrit dans la demande de brevet GB-A-2 054 978 déjà citée. Il en résulte donc, même dans ces variantes, un gain de surface important sur le circuit intégré qui regroupe tous les circuits électroniques du dispositif auquel est associé le moteur.

En outre, le rotor du moteur selon l'invention fait un tour complet à chaque pas, et par conséquent les impulsions de courant nécessaires à sa commande ont toutes le même sens. Il en résulte que, si le rotor perd un pas pour une raison quelconque, c'est-à-dire s'il ne réagit pas à une paire d'impulsions de courant, il réagit à la paire d'impulsions suivante sans perdre un deuxième pas, à condition bien sûr que la cause de la perte du premier pas ait disparu.

Le circuit de commande qui vient d'être décrit délivre des paires d'impulsions de courant ayant des durées égales. En outre, le début de la deuxième impulsion de chaque paire coïncide avec la fin de la première impulsion. Il est évident qu'il est possible de modifier ce circuit de commande pour qu'il délivre, si nécessaire, des impulsions ayant des durées différentes. Il est également possible de le modifier pour que la deuxième impulsion de chaque paire soit enclenchée avant ou après la fin de la première impulsion. Ces modifications sont à la portée de l'homme du métier et ne seront pas décrites ici.

Le circuit de commande du moteur peut être également combiné avec un circuit d'asservissement de la durée des impulsions de courant à la grandeur de la charge mécanique réellement entraînée par le moteur. Il existe de nombreux types de ces circuits d'asservissement qui sont bien connus et qui ne seront pas décrits ici. Dans les cas où les deux bobines ne sont jamais enclenchées simultanément, il est possible de brancher ce circuit d'asservissement à la bobine qui n'est pas parcourue par un courant à l'aide d'un circuit commutateur commandé par des signaux fournis par le circuit logique. Le circuit d'asservissement peut alors simplement utiliser la tension induite dans la bobine à laquelle il est momentanément relié pour commander l'interruption du courant dans l'autre bobine à un instant dépendant de la charge mécanique entraînée par le moteur.

Il est évident que la présente invention ne se limite pas aux seules formes d'exécution décrites et représentées par le dessin. De nombreuses modifications peuvent être apportées, notamment, à la forme et à la disposition des différentes parties du moteur, sans sortir du cadre de l'invention.

**Revendications**

1. Moteur pas-à-pas réversible comprenant une première (2), une deuxième (3) et une troisième pièce polaire (4) comportant respectivement un premier (2a), un deuxième (3a) et un troisième épanouissement polaire (4a) délimitant entre eux un espace sensiblement cylindrique (5), une première bobine (9) reliée magnétiquement à la première (2) et à la deuxième pièce polaire (3) pour produire un premier champ magnétique dans l'espace cylindrique (5) en réponse à un premier courant, une deuxième bobine (10) reliée magnétiquement à la première (2) et à la troisième pièce polaire (4) pour produire un deuxième champ magnétique dans l'espace cylindrique (5) en réponse à un deuxième courant, et un rotor monté rotativement autour d'un axe (12a) sensiblement confondu avec l'axe de l'espace cylindrique (5) et comportant un aimant permanent (12) ayant un axe d'aimantation (12b) sensiblement perpendiculaire à l'axe de rotation (12a), caractérisé par le fait qu'il comprend en outre des moyens pour orienter l'axe d'aimantation (12b) de l'aimant (12), en l'absence de toute autre influence, selon un axe de repos (12c) unique sensiblement parallèle à une droite (17) perpendiculaire à l'axe de rotation (12a) et passant par le milieu du premier épanouissement polaire (2a), les épanouissements polaires (2a, 3a, 4a) étant disposés de manière que les champs magnétiques aient, dans l'espace cylindrique (5), des directions non parallèles sensiblement symétriques par rapport à ladite droite (17), lesdits champs magnétiques formant ainsi avec l'axe de repos (12c), dans l'espace cylindrique (5), des angles obtus sensiblement symétriques par rapport à l'axe de repos (12c) pour un sens déterminé du premier et, respectivement, du deuxième courant, le rotor pouvant ainsi être mis en rotation par une paire d'impulsions de courant consécutives ayant toutes deux ledit sens déterminé et appliquées l'une à l'une des bobines et l'autre à l'autre des bobines, et le sens de rotation du rotor étant ainsi déterminé par la bobine à laquelle est appliquée la première impulsion de ladite paire d'impulsions.

2. Moteur pas-à-pas selon la revendication 1, caractérisé par le fait que les moyens pour orienter l'axe d'aimantation (12b) de l'aimant (12) comportent un deuxième aimant permanent (13) ayant un axe d'aimantation (13a) sensiblement situé dans un plan défini par l'axe de rotation (12a) et par ladite droite (17).

3. Moteur pas-à-pas selon la revendication 2, caractérisé par le fait que les moyens pour orienter l'axe d'aimantation de l'aimant (12) comportent un troisième aimant permanent (18) ayant un axe d'aimantation (18a) sensiblement symétrique de l'axe d'aimantation (13a) du deuxième aimant (13) par rapport à ladite droite (17).

4. Moteur pas-à-pas selon la revendication 1, caractérisé par le fait que les angles obtus ont une valeur comprise entre 100° environ et 160° environ.

5. Moteur pas-à-pas selon la revendication 4, caractérisé par le fait que les angles obtus ont une valeur sensiblement égale à 120°.

6. Procédé de commande du moteur selon l'une des revendications 1 à 5, caractérisé par le fait qu'il consiste à produire une paire d'impulsions de courant consécutives ayant chacune ledit sens déterminé, à appliquer la première impulsion de la paire à la première bobine (9) et la deuxième impulsion de la paire à la deuxième bobine (10) pour faire tourner le rotor dans un premier sens, et à appliquer la première impulsion de la paire à la deuxième bobine (10) et la deuxième impulsion de la paire à la première bobine (9) pour faire tourner le rotor dans le deuxième sens.

## Claims

1. Reversible stepping motor comprising a first (2), a second (3) and a third pole piece (4) respectively comprising a first (2a), a second (3a) and a third pole face (4a) defining therebetween a substantially cylindrical space (5), a first winding (9) magnetically coupled to the first pole piece (2) and the second pole piece (3) for producing a first magnetic field in the cylindrical space (5) in response to a first current, a second winding (10) magnetically coupled to the first pole piece (2) and the third pole piece (4) for producing a second magnetic field in the cylindrical space (5) in response to a second current, and a rotor mounted rotatably about an axis (12a) substantially coincident with the axis of the cylindrical space (5) and comprising a permanent magnet (12) having a magnetic axis (12b) substantially perpendicular to the axis of rotation (12a), characterized in that it further comprises means for orienting the magnetic axis (12b) of the magnet (12), in the absence of any other influence, along a rest axis (12c) substantially parallel to a straight line (17) which is perpendicular to the axis of rotation (12a) and which passes through the middle of the first pole face (2a), the pole faces (2a, 3a, 4a) being disposed in such a way that the magnetic fields have, in the cylindrical space (5), directions which are not parallel and which are substantially symmetrical with respect to said straight line (17), said magnetic fields forming then with the rest axis (12c), in the cylindrical space (5), obtuse angles which are substantially symmetrical with respect to the rest axis (12c) for a determined direction of the first and the second current respectively, the rotor being then able to be rotated by a pair of consecutive current pulses having both said determined direction and being applied one to one of the windings and the other to the other of the windings, and the rotation direction of the rotor being then determined by the winding to which the first pulse of said pair of pulses is applied.

2. Stepping motor according to claim 1, characterized in that the means for orienting the magnetic axis (12b) of the magnet (12) comprises a second permanent magnet (13) having a magnetic axis (13a) which is substantially disposed in a plane which is defined by the rotation axis (12a) and said straight line (17).

3. Stepping motor according to claim 2, characterized in that the means for orienting the magnetic axis (12b) of the magnet (12) comprises a third permanent magnet (18) having a magnetic axis (18a) which is substantially symmetrical to the magnetic axis (13b) of the second magnet (13) with respect to said straight line (17).

4. Stepping motor according to claim 1, characterized in that the obtuse angles have a value which is comprised between about 100° and about 160°.

5. Stepping motor according to claim 4, characterized in that the obtuse angles have a value which is substantially equal to 120°.

6. Method for controlling the motor according to one of claims 1 to 5, characterized in that it comprises producing a pair of consecutive current pulses having both said determined direction, applying the first pulse of the pair to the first winding (9) and the second pulse of the pair to the second winding (10) in order to rotate the rotor in a first direction, and applying the first pulse of the pair to the second winding (10) and the second pulse of the pair to the first winding (9) in order to rotate the rotor in the second direction.

## Patentansprüche

1. Umkehrbarer Schrittmotor, umfassend ein erstes (2), ein zweites (3) und ein drittes Polstück (4), die jeweils einen ersten (2a), einen zweiten (3a) und einen dritten (4a) polaren Abschnitt haben, welche zueinander einen zylindrischen Raum (5) abgrenzen, eine erste, magnetisch mit dem ersten (2) und dem zweiten Polstück (3) verbundene Wicklung (9), die bei Anlegen eines ersten Stroms ein erstes Magnetfeld im zylindrischen Raum (5) erzeugt, eine zweite, magnetisch mit dem ersten (2) und dem dritten Polstück (4) verbundene Wicklung (10), die bei Anlegen eines zweiten Stroms ein zweites Magnetfeld im zylindrischen Raum (5) erzeugt, und einen Rotor, der um eine mit der Achse des zylindrischen Raums (5) koinzidierenden Achse (12a) drehend montiert ist und einen Permanentmagneten (12) umfasst, dessen Magnetisierungsachse (12b) rechtwinklig zur Drehachse (12a) verläuft, dadurch gekennzeichnet, dass er ferner Mittel zur Orientierung der Magnetisierungsachse (12b) des Magneten (12) ohne weiteren Einfluss gemäss einer einzigen Ruheachse (12c) umfasst, die parallel zu einer Geraden (17) liegt, welche rechtwinklig zur Drehachse (12a) sowie durch die Mitte des ersten polaren Abschnitts (2a) verläuft, wobei die polaren Abschnitte (2a, 3a, 4a) so angeordnet sind, dass die Magnetfelder im zylindrischen Raum (5) nichtparallele, symmetrisch zur genannten Geraden (17) verlaufende Richtungen erhalten und die genannten Magnetfelder mit der Ruheachse (12c) im zylindrischen Raum (5) stumpfe Winkel bilden, die für einen gegebenen Sinn des ersten und, beziehungsweise, des zweiten Stroms symmetrisch zur Ruheachse (12c) liegen, wodurch der Rotor durch ein Paar aufeinanderfolgender Stromimpulse in Drehung versetzt werden kann, die beide den genannten gegebenen Sinn haben und von denen einer an eine der Wicklungen und der andere an die andere der Wicklungen angelegt wird, und der Drehsinn des Rotors durch die Wicklung bestimmt ist, an der der erste Impuls des genannten Impulspaars angelegt wird.

2. Schrittmotor gemäss Anspruch 1, dadurch gekennzeichnet, dass die Mittel zur Orientierung der Magnetisierungsachse (12b) des Magneten (12) einen zweiten Permanentmagneten (13) umfassen, dessen Magnetisierungsachse (13a) in einer von der Drehachse (12a) und von der genannten Geraden (17) bestimmten Ebene liegt.

3. Schrittmotor gemäss Anspruch 2, dadurch gekennzeichnet, dass die Mittel zur Orientierung der Magnetisierungsachse (12b) des Magneten (12) einen dritten Permanentmagneten (18) umfassen, dessen Magnetisierungsachse (18a) in bezug auf die genannte Gerade (17) symmetrisch zur Magnetisierungsachse (13a) des zweiten Magneten (13) liegt.

4. Schrittmotor gemäss Anspruch 1, dadurch gekennzeichnet, dass die stumpfen Winkel einen Wert haben, der zwischen ca. 100° und ca. 160° liegt.

5. Schrittmotor gemäss Anspruch 4, dadurch gekennzeichnet, dass die stumpfen Winkel einen Wert von 120° haben.

6. Verfahren zur Steuerung des Motors gemäss einem der Ansprüche 1 bis 5, dadurch gekennzeichnet, dass es darin besteht, ein Paar aufeinanderfolgender Stromimpulse zu erzeugen, die beide den genannten gegebenen Sinn haben, den ersten Impuls des Paars an die erste Wicklung (9) und den zweiten Impuls des Paars an die zweite Wicklung (10) anzulegen, um den Rotor gemäss einem ersten Sinn in Drehung zu versetzen, und den ersten Impuls des Paars an die zweite Wicklung (10) und den zweiten Impuls des Paars an die erste Wicklung (9) anzulegen, um den Rotor gemäss dem zweiten Sinn in Drehung zu versetzen.

**Fig.1**

**Fig.1a**

**Fig.2**

**Fig.4a**

**Fig.4b**

Fig.3

Fig. 5

Fig.6